# DEMANDE DE BREVET EUROPEEN

(11) **EP 1 232 880 A1**
(43) Date de publication de la demande: **21.08.2002**
(21) Numéro de dépôt: 02290333.0
(22) Date de dépôt: 12.02.2002
(51) Int. Cl.: B60B 1/10

(54) **Disque en tôle embouti avec rayons**

(30) Priorité: 15.02.2001 FR 0102068
(71) Demandeur: USINOR, 92800 Puteaux (FR)
(72) Inventeur: Penne, Francesco, 1400 Nivelles (BE); Gasquez, Richard, 13270 Fos sur Mer (FR); Luccioni, Hervé, 13200 Arles (FR)
(74) Mandataire: Lagrange, Jacques Etienne

(57) **Abrégé**

Roue de véhicule (1) terrestre à moteur comportant de manière générale, un voile (2) de roue et une jante (3) sensiblement cylindrique, le voile de roue étant constitué d'une partie centrale (4) sensiblement plane comportant une portée (5) qui sert à centrer et à fixer la roue sur le moyeu de l'essieu du véhicule, une partie périphérique (6) qui peut présenter au moins un rayon de courbure, la partie périphérique se terminant par un bord (7) pouvant être annulaire, sensiblement cylindrique, destiné à la liaison du voile de roue avec la jante, caractérisé en ce que le voile de roue est composé d'une pièce mise en forme par déformation d'au moins un flan de tôle ou d'au moins un tube, et présentant une partie centrale (12) comportant un plan d'appui (13) pour un contact avec l'extrémité de l'essieu et sur lequel sont ménagés les trous de fixation (14) de la roue sur le moyeu du véhicule, une partie périphérique générant des rayons (15) concentriques formant une coquille (16), associés par une de leur extrémité (17) à la partie centrale comportant le plan d'appui, l'autre extrémité (18) des rayons concentriques étant reliée à la jante.

## Description

La présente invention concerne une roue de véhicule terrestre à moteur. Les roues pour véhicules terrestres à moteur peuvent aujourd'hui être regroupées en deux grandes familles.

Les roues dites optimisées : dans le domaine de la réalisation de roues de véhicules automobiles, les constructeurs cherchent à alléger les véhicules et pour cela cherchent à alléger, individuellement, tous les composants du véhicule automobile. Les fabricants de roues se doivent donc d'optimiser le poids des roues, d'autant plus qu'il s'agit d'un organe moteur non suspendu. L'allégement est l'objectif recherché.

Le voile de roue est constitué d'une partie centrale sensiblement plane comportant une portée qui sert à centrer et à fixer la roue sur le moyeu de l'essieu du véhicule, une montée intérieure sensiblement conique qui présente au moins un rayon de courbure, la montée intérieure se terminant par un bord sensiblement cylindrique destiné à la liaison du voile avec la jante. L'assemblage de la jante et du voile est généralement obtenu par soudage, tandis que la liaison de la roue avec le moyeu est obtenue par une fixation au moyen de boulons.

Dans ce type de roue, le voile est, de préférence, obtenu par emboutissage d'un flan monolithique d'acier ou d'aluminium. Cette technique conduit à des gradients importants d'épaisseur et de résistance mécanique entre le centre et la périphérie du voile lié à la mise en forme. Le centre du voile, généralement de forte épaisseur, et peu déformé, constitue la principale zone critique en fatigue et détermine donc les dimensions et le poids de la totalité de la pièce. L'esthétique de ce type de roue est réalisée grâce à des enjoliveurs en pièce rapportés recouvrant le voile de roue. C'est le marché principal pour les roues en acier.

Les roues dites de style : pour ces roues, la caractéristique recherchée est l'esthétique. Ces roues sont de préférence en aluminium moulé. La tendance du marché est d'aller vers ce type de roue. Pour le marché, les roues optimisées ne constituent pas, aujourd'hui, un produit commercialement intéressant. C'est pour cette raison que les solutions aluminium prennent des parts de marché de plus en plus importantes.

Une roue en aluminium, comme par exemple comprenant un voile monolithique fluotournée, présente deux inconvénients : une masse relativement élevée et une tenue en fatigue limitée.

Le but de l'invention est de réaliser par des techniques de mise en forme de flan de tôle d'acier ou de tube d'acier, une roue qui présente d'une part, les caractéristiques d'allègement des roues dites optimisées avec, en plus, l'esthétique des roues dites de style, généralement obtenues par des moyens de moulage de métaux légers en fusion.

L'invention a pour objet une roue de véhicule terrestre à moteur comportant, un voile de roue et une jante sensiblement cylindrique, le voile de roue étant constitué d'une partie centrale sensiblement plane comportant une portée qui sert à centrer et à fixer la roue sur le moyeu de l'essieu du véhicule, une partie périphérique qui peut présenter au moins un rayon de courbure, la partie périphérique se terminant par un bord pouvant être annulaire, destiné à la liaison du voile de roue avec la jante, caractérisé en ce que le voile de roue est composé d'une partie centrale comportant une partie pour fixer la roue sur le moyeu du véhicule sur laquelle sont ménagés les trous de fixation de la roue sur le dit moyeu, d'une partie périphérique générant des rayons concentriques et mis en forme par déformation d'au moins un flan de tôle ou d'au moins un tube, les rayons étant associés par une de leur extrémité à la partie centrale, l'autre extrémité desdits rayons concentriques étant reliée à la jante.

Les autres caractéristiques de l'invention sont :
- le voile de roue est obtenu à partir d'au moins un flan de tôle embouti, les demi rayons emboutis ayant la forme de gouttières concentriques, ou en étoile.
- les demi rayons emboutis en forme de gouttière sont associés à un couvercle pouvant être embouti pour former un tube ou un caisson.
- les rayons tubulaires sont mis en forme par hydroformage.
- les rayons sont reliés entre eux par une couronne pour leur liaison avec la jante, la couronne étant soit prise dans le flan de tôle lors de l'emboutissage des rayons ou du couvercle, soit réalisée en pièce indépendante.
- la partie périphérique du voile de roue est assemblée avec des moyens choisis parmi, le collage, le soudage de type laser, le soudage de type MAG, soudage par points ou cordon continu ou discontinu.

La description, comprenant les figures et des exemples d'application non limitatifs, fera bien comprendre l'invention.

La figure 1 présente une roue de l'invention réalisée dans une technique d'emboutissage d'un flan de tôle, pouvant être obtenue par un assemblage de pièces soudées.

La figure 2 présente un voile de roue de l'exemple de la figure 1.

Les figures 3 A et 3 B sont des schémas présentant, en coupe transversale, un rayon de la roue réalisé dans une technique en deux demi-coquilles.

La figure 4 est un schéma, en élévation, d'une roue à 5 rayons, en coquilles.

La figure 5 présente une roue selon l'invention réalisée par hydroformage de tubes et assemblée par soudure.

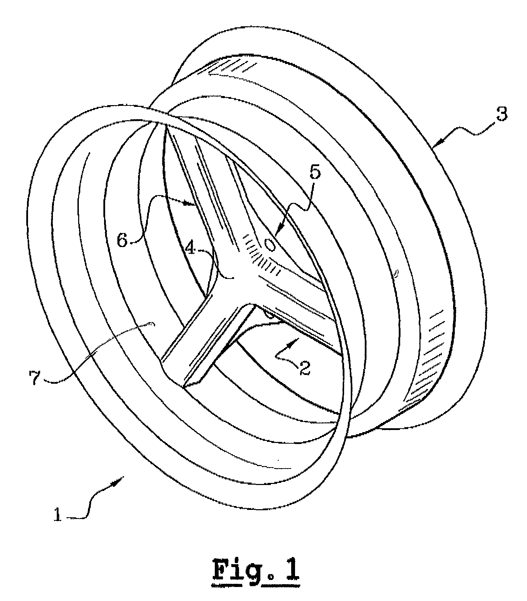

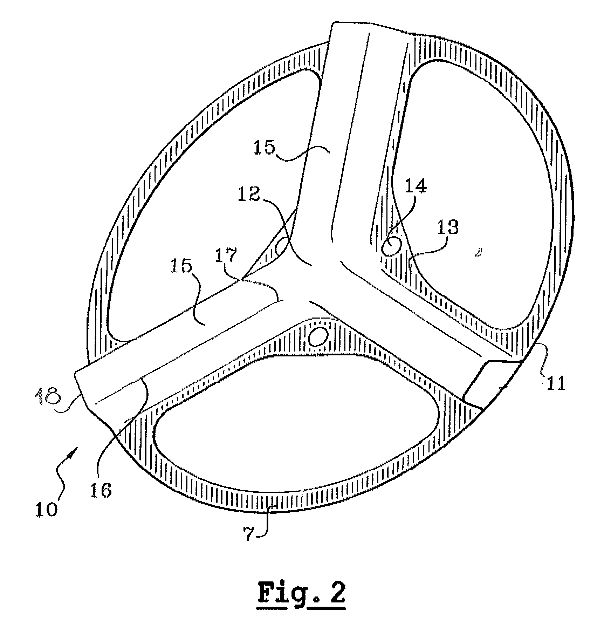

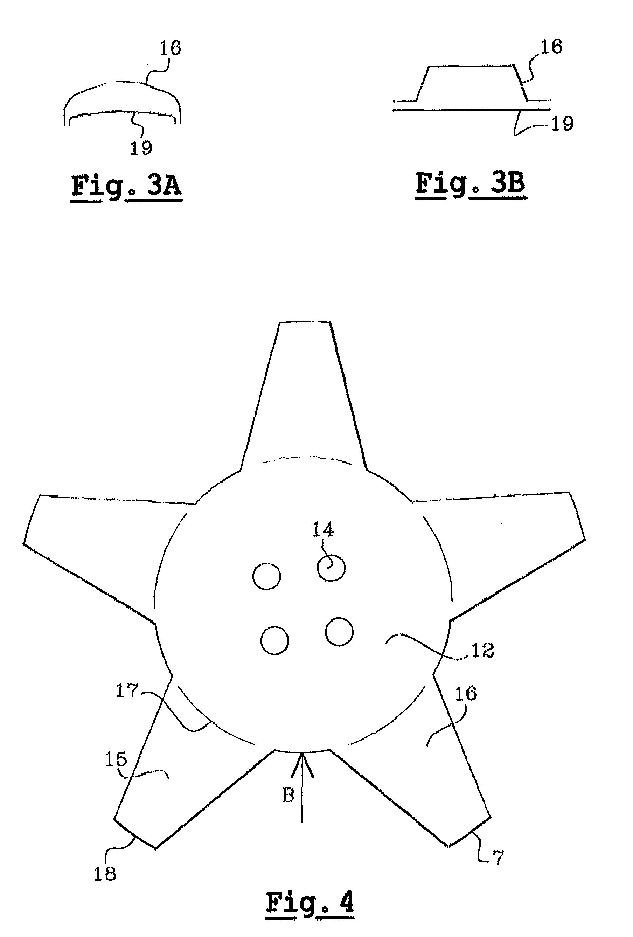

L'invention concerne une roue 1, comme représenté sur la figure 1, de véhicule terrestre à moteur comportant de manière générale, un voile 2 de roue et une jante 3 sensiblement cylindrique, le voile 2 de roue étant constitué d'une partie centrale 4 sensiblement plane comportant une portée 5 qui sert à centrer et à fixer la roue sur le moyeu de l'essieu du véhicule, une partie périphérique 6 qui peut présenter au moins un rayon de courbure, la partie périphérique 6 se terminant par un bord 7 pouvant être une couronne, sensiblement cylindrique, destiné à la liaison du voile 2 de roue avec la jante 3. L'invention se caractérise en ce que le voile 2 de roue 1, comme représenté sur les figures 2, 3A et 3B, est composé d'au moins une pièce 10 mise en forme par déformation d'au moins un flan 11 de tôle, et présentant une partie centrale 12 comportant un plan d'appui 13 pour un contact avec l'extrémité de l'essieu et sur lequel sont ménagés les trous 14 de fixation de la roue 1 sur l'essieu du véhicule, d'une partie périphérique générant des rayons 15 concentriques formés d'au moins une coquille 16, associés par une de leur extrémité 17 à la partie centrale 12 comportant le plan d'appui, l'autre extrémité 18 des rayons 15 étant reliés directement ou indirectement à la jante 3.

La coquille 16 est obtenue à partir de la découpe d'un flan à plat. Le flan peut être légèrement embouti afin de former des raidisseurs du type bossettes et ou nervures. La pièce 10 comprend la partie centrale 12 où les trous 14 de fixation sont percés ainsi que des liaisons, par exemple soudées, entre partie centrale et les rayons. Les rayons, au nombre de trois ou cinq, formant la partie périphérique du voile, servent à rigidifier le voile pour le chargement radial.

Le voile de roue selon l'invention qui présente une forme en étoile peut constituer le squelette pour une roue de style qui serait réalisée par enrobage, ou encore, réalisée en structure creuse en acier embouti puis enrobé, pour réaliser un voile d'aspect esthétique.

Le voile selon l'invention, comme schématisés sur les figures 3A et 3B, qui représente un rayon en coupe, se compose de deux demi-coquilles 16, 19 qui sont assemblées ou emboîtées, et liées, par exemple, par soudage. Au moins une demi-coquille du voile de roue est obtenue à partir d'au moins un flan de tôle embouti, les rayons emboutis ayant la forme de gouttières concentriques, ou en étoile. Les rayons emboutis, par exemple en forme de gouttière, comportent une demi-coquille 19 en couvercle pour former un caisson, ou un rayon tubulaire en deux demi-coquilles.

Pour la liaison de deux demi-coquilles, un sertissage et/ou un rivetage et/ou un vissage peut être appliqué. La forme qui en résulte est celle d'une roue à rayons ou étoilée. Le nombre des rayons peut être de trois, quatre, cinq , comme représenté figure 4, ou plus, à déterminer en fonction des caractéristiques de charge et d'esthétique recherchées. Grâce aux volumes qui sont laissés libres par cette structure, on peut facilement obtenir un effet de style à travers un enrobage approprié.

Le voile ainsi réalisé peut être facilement obtenu avec des flans raboutés ou collés afin d'épaissir la partie centrale 12. Sous cette forme, la partie centrale peut être constituée de deux peaux espacées pour former une structure sandwich rigide apte à supporter les contraintes mécaniques que subit cette zone.

La partie périphérique peut être directement liée sur la jante par une extrémité des rayons. De préférence, les rayons sont reliés entre eux par un bord 7 ou couronne, la couronne étant liée à la jante. La couronne est, soit prise dans le flan de tôle lors de l'emboutissage des rayons ou du couvercle, soit réalisée en une pièce indépendante puis soudée.

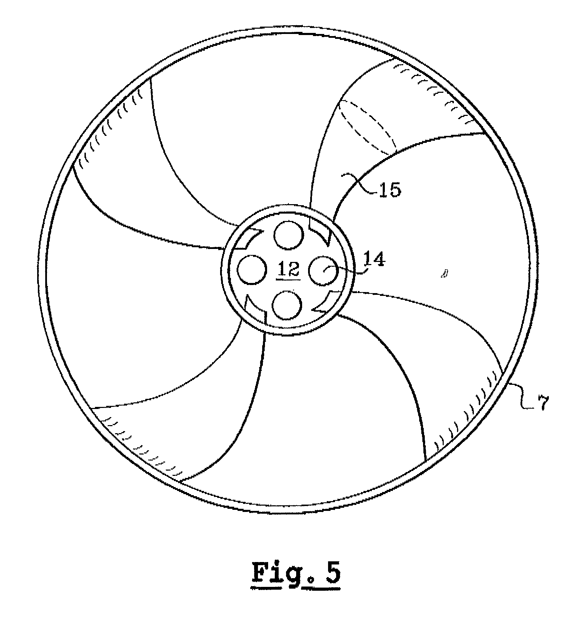

Un tombé de bord réalisé sur la couronne permet de créer la surface par laquelle le voile sera fixé à la jante. Dans un exemple d'application, il est utilisé un flan rabouté laser ou patchwork pour au moins une demi-coquille.
- Diamètre de la roue : 13 pouces.
- Epaisseur d'une demi-coquille en partie centrale : 3.5mm
- Epaisseur de la demi-coquille partie périphérique : 2mm
- Epaisseur d'une demi-coquille couvercle : 2.5mm
- Chargement appliqué : flexion rotative à 1880Nm
- Poids du voile réalisé : 4.8Kg
La solution proposée est très intéressante car :
- Des nombreuses voies d'optimisation et de conception sont possibles, entraînant des marges d'amélioration importantes.
   Dans un autre exemple d'application selon l'invention, comme présenté sur la figure 5, les rayons tubulaires sont obtenus par hydroformage à partir de tubes. Les deux extrémités des tubes sont écrasés puis soudés par cordon d'une part, sur la jante soit au niveau du creux de jante, soit au niveau du repos de talon, et d'autre part, sur la partie centrale du voile constitué d'un disque dans lequel sont formées des bossettes, percés les trous de fixation et le trou de centrage et conformés les détails géométriques. La liaison entre les tubes et la partie centrale se fait par des soudures par cordons, coté extérieur de roue. On a donc la possibilité de masquer cette partie centrale par un cache ou un enrobage par exemple plastique. La rigidité de la roue est donnée par l'inertie des tubes et le style est donné par la forme de ceux-ci et également par l'aspect de la roue à rayons.
- la partie périphérique du voile de roue est assemblée avec des moyens choisis parmi, le collage, le soudage de type laser, le soudage de type MAG, soudage par points ou cordon continu ou discontinu.

Chacune de ces pièces est réalisée en une nuance, par exemple d'acier peu sensible à l'effet d'entaille ou encore, par exemple, à caractéristiques mécaniques élevées et d'une bonne aptitude à la découpe.

La solution proposée a été illustrée pour une roue de type «base well attached», c'est-à-dire une roue pour laquelle la jonction jante disque se fait sur le creux de jante. Il est toutefois possible et même préférable de l'appliquer à des roues de type «bead seat attached».

## Revendications

1. Roue de véhicule terrestre à moteur comportant de manière générale, un voile de roue et une jante sensiblement cylindrique, le voile de roue étant constitué d'une partie centrale sensiblement plane comportant une portée qui sert à centrer et à fixer la roue sur le moyeu de l'essieu du véhicule, une partie périphérique qui peut présenter au moins un rayon de courbure, la partie périphérique se terminant par un bord pouvant être annulaire, sensiblement cylindrique, destiné à la liaison du voile de roue avec la jante, **caractérisé en ce que** le voile de roue est composé d'une partie centrale comportant une partie pour fixer la roue sur le moyeu du véhicule sur laquelle sont ménagés les trous de fixation de la roue sur le dit moyeu, d'une partie périphérique générant des rayons concentriques et mis en forme par déformation d'au moins un flan de tôle ou d'au moins un tube, les rayons étant associés par une de leur extrémité à la partie centrale, l'autre extrémité desdits rayons concentriques étant reliée à la jante.

2. Roue selon la revendication 1 **caractérisé en ce que** le voile de roue est obtenu à partir d'au moins un flan de tôle embouti, les demi rayons emboutis ayant la forme de gouttières concentriques, ou en étoile.

3. Roue selon la revendication 1 **caractérisé en ce que** les demi rayons emboutis en forme de gouttière sont associés à un couvercle pouvant être embouti pour former un tube ou un caisson.

4. Roue selon la revendication 1 **caractérisé en ce que** les rayons tubulaires sont mis en forme par hydroformage.

5. Roue selon la revendication 1 **caractérisé en ce que** les rayons sont reliés entre eux par une couronne pour leur liaison avec la jante, la couronne étant soit prise dans le flan de tôle lors de l'emboutissage des rayons ou du couvercle, soit réalisée en pièce indépendante.
